# EUROPEAN PATENT APPLICATION

(11) **EP 4 838 684 A1**
(43) Date of publication of application: **11.11.2026**
(21) Application number: 25830929.3
(22) Date of filing: 30.05.2025
(51) Int. Cl.: H01M 50/538, H01M 50/213, H01M 50/249, B60L 50/64, B60K 1/04

(54) **BATTERY, BATTERY PACK AND VEHICLE INCLUDING SAME**

(30) Priority: 19.06.2024 KR 20240079907; 23.05.2025 KR 20250067547
(71) Applicant: LG Energy Solution, Ltd., Seoul 07335 (KR)
(72) Inventor: KO, Kwang-Hun, Daejeon 34122 (KR); KIM, Geon-Guk, Daejeon 34122 (KR); KIM, Do-Gyun, Daejeon 34122 (KR); CHOI, Hyeon-Woo, Daejeon 34122 (KR); HWANG, Dong-Sung, Daejeon 34122 (KR)
(74) Representative: Goddar, Heinz J.
(86) International application number: PCT/KR2025/007439
(87) International publication number: WO 2025/263872

(57) **Abstract**

Disclosed is a battery, which includes an electrode assembly formed by winding a stack having a first electrode, a second electrode, and a separator interposed therebetween; a cell housing configured to accommodate the electrode assembly; and a current collector plate electrically connected to the electrode assembly, wherein an embossing portion is provided on at least a part of the current collector plate.

## Description

### TECHNICAL FIELD

The present disclosure relates to a battery, a battery pack, and a vehicle including the same, and more specifically, to a battery having enhanced rigidity and allowing effective heat dissipation, a battery pack, and a vehicle including the same.

This application is based on and claims priority from Korean Patent Application No. 10-2024-0079907, filed on June 19, 2024, and Korean Patent Application No. 10-2025-0067547, filed on May 23, 2025, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Depending on the charge/discharge capacity required by an electric vehicle (EV) or a hybrid electric vehicle (HEV), a battery pack may be configured by connecting a plurality of batteries in series or parallel. At this time, a battery module including at least one battery is first constructed, and then other components are added to form a battery pack or battery rack using the at least one battery module. Recently, a battery pack in the form of cell-to-pack (CTP) configuration, in which a plurality of batteries are accommodated directly in a pack housing, etc., without modularization, is also manufactured.

A conventional cylindrical battery may include an electrode assembly and a current collector plate. The current collector plate may be configured to be electrically connected to the electrode assembly. The current collector plate may be used as a current path within the battery. The current collector plate may be manufactured in a plate shape. The current collector plate may generally be manufactured by pressing a plate material.

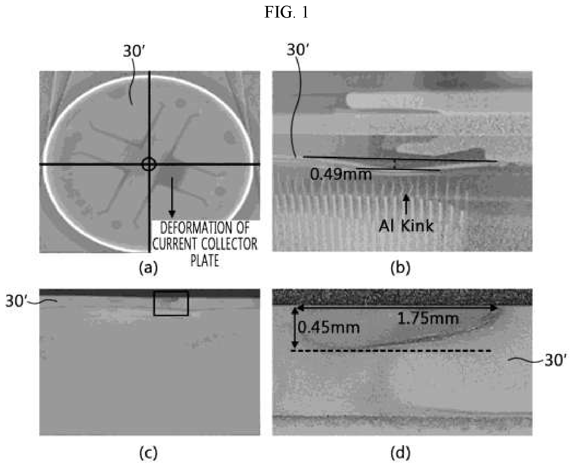

FIG. 1 shows a deformed current collector plate of a conventional battery. FIG. 1(a) shows the overall shape of a deformed current collector plate 30', FIG. 1(b) is an enlarged cross-sectional side view showing an example of a deformed portion of the current collector plate 30', FIG. 1(c) shows another example of a deformed portion of the current collector plate 30', and FIG. 1(d) is an enlarged view showing the deformed portion of FIG. 1(c).

Referring to FIG. 1 above, the current collector plate of a conventional battery has a problem in that it has low rigidity and may be easily deformed. For example, the current collector plate of a conventional battery has a problem in that deformation such as bending may occur due to swelling of the electrode assembly during the activation and cycling process of the battery.

Meanwhile, when heat is generated within the battery, such as in the electrode assembly, the heat needs to be quickly and effectively dissipated to the outside of the battery. However, a current collector plate may be disposed on the heat transfer path of the heat. As a result, the current collector plate may significantly influence the heat dissipation of the battery.

Therefore, there is a need to develop a battery including a current collector plate with improved rigidity and heat dissipation effect.

### DISCLOSURE

### Technical Problem

The present disclosure is designed to solve the problems of the related art, and therefore the present disclosure is directed to providing a battery in which the rigidity of a current collector plate is enhanced so that deformation of the current collector plate may be effectively prevented, a battery pack, and a vehicle including the same.

In addition, the present disclosure is directed to providing a battery allowing effective heat dissipation, a battery pack and a vehicle including the same.

The technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery comprising: an electrode assembly formed by winding a stack having a first electrode, a second electrode, and a separator interposed therebetween; a cell housing configured to accommodate the electrode assembly; and a current collector plate electrically connected to the electrode assembly, wherein an embossing portion is provided on at least a part of the current collector plate.

The embossing portion may be formed in a regularly repeating pattern.

The embossing portion may be formed in an irregular shape.

The current collector plate may have a first connection portion provided at a center of the current collector plate, and the embossing portion may be provided on at least a part of the first connection portion.

The current collector plate may have a second connection portion electrically connected to the electrode assembly, and the embossing portion may be provided on at least a part of the second connection portion.

The embossing portion provided on the second connection portion may be configured in a radial shape.

The current collector plate may include a first connection portion provided at the center of the current collector plate; a second connection portion electrically connected to the electrode assembly; and a bridge portion configured to connect the first connection portion and the second connection portion, wherein the embossing portion may be provided on at least a part of the bridge portion.

The bridge portion may be formed to extend to connect the first connection portion and the second connection portion, and the embossing portion provided on the bridge portion may be configured to extend in a direction parallel to an extension direction of the bridge portion.

The current collector plate may have a peripheral portion provided along a periphery of an edge, and the embossing portion may be provided on at least a part of the peripheral portion.

The embossing portion provided on the peripheral portion may be configured to extend in a circumferential direction.

The embossing portion may be provided in different shapes on at least two parts of the current collector plate.

The embossing portion may be formed on a surface of the current collector plate opposite to the electrode assembly.

The embossing portion may be formed on a surface of the current collector plate facing the electrode assembly.

In another aspect of the present disclosure, there is provided a battery pack including at least one battery according to the present disclosure.

In another aspect of the present disclosure, there is provided a vehicle including at least one battery pack according to the present disclosure.

### Advantageous Effects

According to the present disclosure, a battery in which the rigidity of the current collector plate is strengthened so that deformation of the current collector plate may be effectively prevented, a battery pack, and a vehicle including the same may be provided.

In addition, according to one aspect of the present disclosure, a battery allowing effective heat dissipation, a battery pack, and a vehicle including the same may be provided.

In addition, according to one aspect of the present disclosure, a battery with improved weldability, a battery pack, and a vehicle including the same may be provided.

In addition, according to one aspect of the present disclosure, it is possible to provide a battery and battery pack with improved quality, and a vehicle including the same.

The effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 shows a deformed current collector plate of a conventional battery.
FIG. 2 is a perspective view showing the overall configuration of a battery according to an embodiment of the present disclosure.
FIG. 3 is a side cross-sectional view showing the internal appearance of a battery according to an embodiment of the present disclosure.
FIG. 4 is a plan view showing a current collector plate and a can housing according to an embodiment of the present disclosure.
FIG. 5 is an enlarged view showing examples of a battery according to an embodiment of the present disclosure in which embossing portions are formed in a regularly repeating pattern, and examples of a battery according to another embodiment of the present disclosure in which embossing portions are formed in an irregular shape.
FIG. 6 is a plan view separately showing a current collector plate of a battery according to a modified example of an embodiment of the present disclosure.
FIG. 7 is an enlarged plan view showing a second connection portion in FIG. 6.
FIG. 8 is an enlarged view showing a bridge portion in FIG. 6.
FIG. 9 is an enlarged plan view showing a peripheral portion in FIG. 6.
FIG. 10 is a side cross-sectional view showing a battery according to an embodiment of the present disclosure in which an embossing portion is formed on a surface of the current collector plate opposite to the electrode assembly.
FIG. 11 is a side cross-sectional view showing a battery according to an embodiment of the present disclosure in which an embossing portion is formed on a surface of the current collector plate facing the electrode assembly.
FIG. 12 is a drawing showing a battery pack according to an embodiment of the present disclosure.
FIG. 13 is a drawing showing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In addition, the sizes of some elements shown in the attached drawings may be exaggerated, instead of reflecting their actual sizes, for convenience of explanation and clarification. In addition, the same reference numerals may indicate the same elements throughout the embodiments.

The statement that two compared objects are identical means "substantially identical". Therefore, "substantially identical" may include deviations considered low in the art, such as deviations of less than 5%. Furthermore, uniformity of a parameter over a given region may mean uniformity on average.

Although "first", "second", etc. are used to describe various elements, these elements are not limited to these terms. These terms are only used to distinguish one element from another element, and unless otherwise stated, a first element may also be a second element.

Throughout the specification, unless otherwise stated, respective elements may include a single element or a plurality of elements.

Configuration in which an element is disposed "in the upper portion (or lower portion)" or "at the top (or bottom)" of a target element may indicate that the element may be disposed in contact with the upper surface (or lower surface) of the target element and that another element may be interposed between the target element and the element disposed at the top (or bottom) of the target element.

Additionally, the expression "an element is 'connected,' 'coupled,' or 'fastened' to another element" should be understood that the two elements may be directly connected or coupled to each other, and that another element may be "interposed" between the two elements, or that the two elements may be "connected," "coupled," or "fastened" through another element.

Throughout the specification, the expression "A and/or B" means A, B, or A and B, unless otherwise stated, and the expression "C to D" means C or more and D or less, unless otherwise stated.

The present disclosure may be implemented independently of the following embodiments. Furthermore, the present disclosure may be implemented by combining two or more of the following embodiments. The respective embodiments below may be implemented independently and freely combined with each other.

Meanwhile, the common content described in one embodiment of the present disclosure may also be applied to other embodiments. For example, the content of the second embodiment, which is common to the first embodiment, may be replaced with the description of the first embodiment, but the common content may also be applied to the second embodiment. In addition, the content described in the second embodiment, which is applicable to the first embodiment, may also be applied to the first embodiment. The same applies to other embodiments.

In this specification, unless otherwise specified, the X-axis and Y-axis directions may be the left and right direction and the front and rear direction, or the front and rear direction and the left and right direction, respectively, and the Z-axis direction orthogonal to the X-Y plane may be the upper and lower direction (vertical direction).

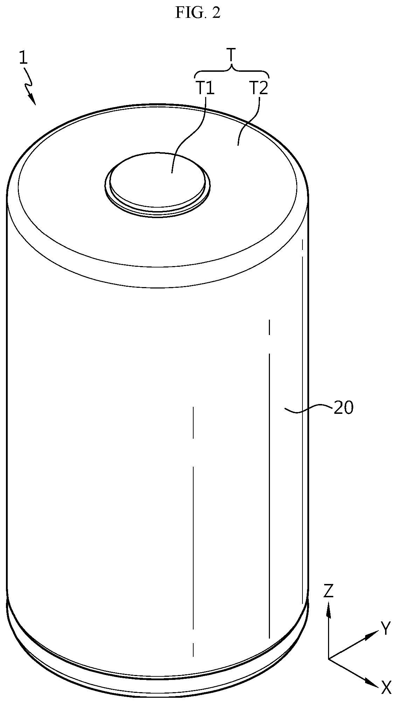

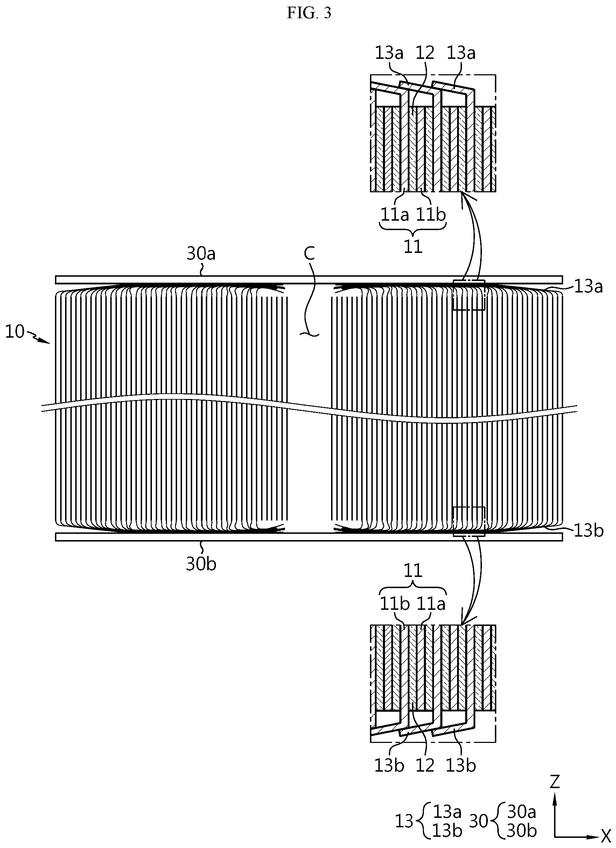

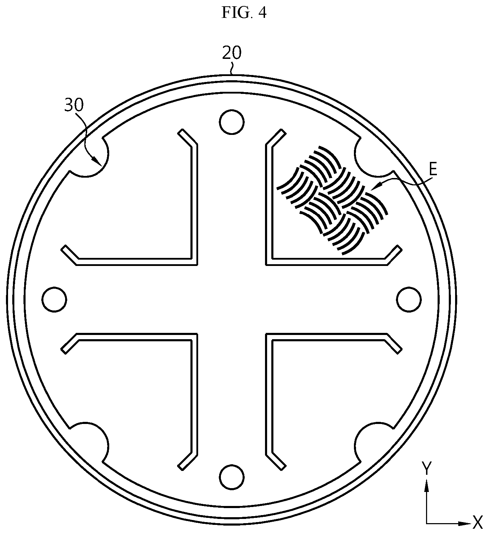

FIG. 2 is a perspective view showing the overall configuration of a battery according to an embodiment of the present disclosure, FIG. 3 is a side cross-sectional view showing the internal appearance of a battery according to an embodiment of the present disclosure, and FIG. 4 is a plan view showing a current collector plate and a can housing according to an embodiment of the present disclosure.

Hereinafter, a battery 1 according to an embodiment of the present disclosure will be described in detail with reference to FIGS. 2 to 4. The battery 1 according to an embodiment of the present disclosure may include an electrode assembly 10, a cell housing 20, and a current collector plate 30. The battery 1 may be a secondary battery configured to be capable of charging and discharging.

The electrode assembly 10 may include electrodes 11 and a separator 12. The electrodes 11 may have different polarities. Specifically, the electrodes 11 may include a first electrode 11a and a second electrode 11b. The first electrode 11a may have a first polarity, and the second electrode 11b may have a second polarity opposite the first polarity. For example, the first polarity may be a positive electrode and the second polarity may be a negative electrode. The separator 12 may be interposed between electrodes 11 of different polarities. The separator 12 may be interposed between the first electrode 11a and the second electrode 11b. The separator 12 may be an insulator.

The electrode assembly 10 may have a jelly-roll structure. That is, the electrode assembly 10 may be manufactured by winding a stack formed by stacking at least once the first electrode 11a and the second electrode 11b in the form of sheets with the separator 12 interposed therebetween around the central winding hole C. Any structure known as a jelly-roll structure in the art may be applied without limitation to the present disclosure.

The electrode 11 may include a conductive metal material. For example, the electrode 11 may include one of aluminum (Al) and copper (Cu). In particular, the first electrode 11a may include aluminum, and the second electrode 11b may include copper.

The electrode 11 may have a coated portion and an uncoated portion. The coated portion may be a portion on which an active material layer is coated on at least one surface of the electrode 11. For example, a positive electrode active material may be coated on the coated portion of the first electrode 11a, and a negative electrode active material may be coated on the coated portion of the second electrode 11b.

The uncoated portion may be a portion of the electrode 11 on which the active material is not coated. The electrode 11 may have a predetermined length and width, and the uncoated portion may be formed on one long side of the electrode 11.

At least a portion of the uncoated portion may be exposed to the outside of the separator 12. The uncoated portion may be used as a tab of the electrode 11.

The electrode may have a plurality of foil tabs 13. The plurality of foil tabs 13 may be provided on the uncoated portion. The foil tabs 13 may be exposed to the outside of the separator 12. The plurality of foil tabs 113 may be arranged in a row from the central winding hole C toward the outer circumference. The plurality of foil tabs 13 may be formed by one or more notched parts formed by a notching process.

Among the foil tabs 13, the foil tab 13 of the first electrode 11a may be referred to as a first foil tab 13a, and the foil tab 13 of the second electrode 11b may be referred to as a second foil tab 13b. The first foil tabs 13a may be disposed at the top of the electrode assembly 10, and the second foil tabs 13b may be disposed at the bottom of the electrode assembly 10.

The electrode 11 may have an insulating coating portion. The insulating coating portion may be disposed at the boundary between the uncoated portion and the coated portion. The insulating coating portion may be provided in a case where the electrode 11 is the first electrode 11a so as to prevent the coated portions of the first electrode 11a and the second electrode 11b from coming into contact with each other.

The cell housing 20 may be configured to store the electrode assembly 10. The cell housing 20 may have a storage space in which the electrode assembly 10 is stored. The cell housing 20 may be configured in a cylindrical shape with a hollow space to store, for example, the electrode assembly 10 therein. The cell housing 20 may include a conductive metal material.

An open portion is formed at one side of the cell housing 20, so that the electrode assembly 10 may be accommodated in the cell housing 20 through the open portion. The cell housing 20 may have a closed portion formed at the opposite side of the open portion. Meanwhile, the cell housing 20 may further have a component such as a cap plate configured to cover the open portion.

The current collector plate 30 may be electrically connected to the electrode assembly 10. The current collector plate 30 may be electrically connected to the electrode 11 of the electrode assembly 10. The current collector plate 30 may be welded to the foil tabs 13.

The current collector plate 30 may be manufactured in a plate shape. The current collector plate 30 may be manufactured, for example, by forming a plate material using a press method.

The current collector plate 30 may include a first current collector plate 30a and a second current collector plate 30b. The first current collector plate 30a may be electrically connected to the first electrode 11a. The first current collector plate 30a may be a positive electrode current collector plate 30. The first current collector plate 30a may be disposed at the +Z direction side or the upper side of the electrode assembly 10.

The second current collector plate 30b may be electrically connected to the second electrode 11b. The second current collector plate 30b may be a negative electrode current collector plate 30. The second current collector plate 30b may be disposed at the -Z direction side or the lower side of the electrode assembly 10.

The current collector plate 30 may be disposed inside the cell housing 20. The current collector plate 30 may be disposed between the cell housing 20 and the electrode assembly 10. For example, the first current collector plate 30a may be disposed at the upper side of the electrode assembly 10, between the electrode assembly 10 and the closed portion of the cell housing 20. For example, the second current collector plate 30b may be disposed at the lower side of the electrode assembly 10, between the electrode assembly 10 and the cap plate of the cell housing 20.

An embossing portion E may be provided on at least a part of the current collector plate 30. That is, an embossing portion E may be provided on at least a part of at least one current collector plate 30 among the first current collector plate 30a and the second current collector plate 30b.

The embossing portion E may be formed by protruding or recessing from the current collector plate 30. The embossing portion E may be formed in a convex or concave shape on any surface of the current collector plate 30. The embossing portion E may be formed as a plurality of protruding or recessed portions in a predetermined area of the surface of the current collector plate 30.

The current collector plate 30 included in the conventional battery 1 is configured as a thin plate having a flat surface, and thus has low rigidity and is susceptible to deformation. For example, when swelling of the electrode assembly 10 occurs during the activation and cycling process of the battery 1, the current collector plate 30 of the conventional battery 1 may be easily deformed. However, since the current collector plate 30 of the battery 1 according to an embodiment of the present disclosure has the embossing portion E, deformation may be effectively prevented even when swelling of the electrode assembly 10 occurs. Specifically, since the stress acting on the current collector plate 30 may be effectively distributed through the embossing portion E, the rigidity of the current collector plate 30 may be strengthened, and deformation of the current collector plate 30 may be effectively prevented.

In addition, the current collector plate 30 with a flat surface included in the conventional battery 1 is formed to have a relatively small surface area, which is disadvantageous for heat dissipation. However, since the current collector plate 30 of the battery 1 according to an embodiment of the present disclosure has the embossing portion E, a relatively large surface area is formed, thereby enabling effective heat dissipation.

In addition, the battery 1 according to an embodiment of the present disclosure may have improved weldability. Specifically, when the embossing portion E of the current collector plate 30 is welded with the electrode assembly 10 or the terminal T, a strong bond may be formed at the welded portion as local pressure is concentrated at the welded portion by the embossing portion E, and the flattening of the welded portion may be more easily formed by the embossing portion E, thereby improving the weldability of the battery 1.

In addition, the battery 1 according to an embodiment of the present disclosure may be provided as a battery 1 with improved quality, as described above, in which deformation of the current collector plate 30 may be effectively prevented and weldability may be improved.

Meanwhile, the battery 1 according to the present disclosure may further include a terminal T. The terminal T may be arranged in the cell housing 20. The terminal T may be electrically connected to the electrode assembly 10.

The terminal T may include a first terminal T1 and a second terminal T2. The first terminal T1 may be electrically connected to the first electrode 11a and may have a first polarity. The first terminal T1 may be arranged in the closed portion. The first terminal T1 may be provided as a rivet terminal T that is provided in a rivet shape and is arranged to penetrate the closed portion. At least a part of the first terminal T1 may protrude and be exposed to the outside of the closed portion. The first terminal T1 may be electrically connected to the first current collector plate 30a.

The second terminal T2 may be electrically connected to the second electrode 11b and may have a second polarity. The cell housing 20 may be electrically connected to the second current collector plate 30b and may have a second polarity, and thus, the remaining part of the closed portion excluding the first terminal T1 may be configured as the second terminal T2.

In the battery 1 according to the present disclosure, both the first terminal T1 and the second terminal T2 are arranged in the closed portion, so that terminals T of different polarities may all be arranged at one side of the battery 1, and thus an electrical connection structure between a plurality of batteries 1 may be easily and efficiently configured.

Meanwhile, a component such as an insulating gasket that insulates the first terminal T1 and the second terminal T2 from each other may be disposed between them.

The embossing portion E may be formed by a press process. The embossing portion E may be formed integrally with the current collector plate 30. The embossing portion E may be manufactured by being formed integrally with the current collector plate 30 by a press process.

The current collector plate 30 may include a rigid material. For example, the current collector plate 30 may include a metal material with rigidity.

The current collector plate 30 may include a thermally conductive material. For example, the current collector plate 30 may include a metal material with thermally conductivity.

The current collector plate 30 may include at least one of an aluminum material and a copper material. For example, the first current collector plate 30a may include an aluminum material. The first current collector plate 30a may include the same material as the first electrode 11a. For example, the second current collector plate 30b may include a copper material. The second current collector plate 30b may include the same material as the second electrode 11b. Aluminum and copper materials have excellent thermal conductivity while having appropriate rigidity. In addition, these materials also have excellent electrical conductivity.

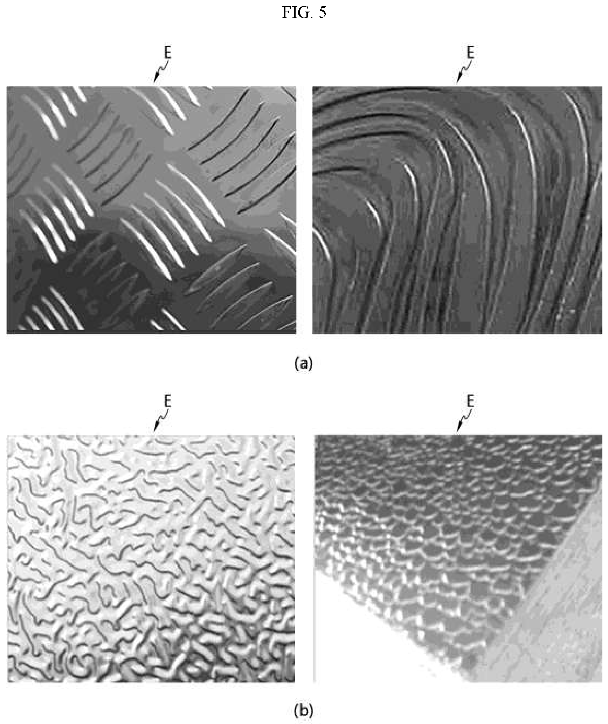

FIG. 5 is an enlarged view showing examples of a battery according to an embodiment of the present disclosure in which embossing portions E are formed in a regularly repeating pattern, and examples of a battery according to another embodiment of the present disclosure in which embossing portions E are formed in an irregular shape.

The left and right drawings of FIG. 5(a) show examples of the embossing portion E having a regularly repeating pattern, respectively. The left and right drawings of FIG. 5(b) show examples of the embossing portion E having an irregular shape, respectively.

Referring to FIG. 5(a), the embossing portion E of the battery 1 according to an embodiment of the present disclosure may be formed in a regularly repeating pattern. The embossing portion E may be formed by protruding in a regularly intersecting pattern, for example, as shown at the left side of FIG. 5(a). The embossing portion E may be formed by protruding in a regularly repeating approximately wave shape, for example, as shown at the right side of FIG. 5(a).

Referring to FIG. 5(b), the embossing portion E of the battery 1 according to another embodiment of the present disclosure may be formed in an irregular shape. The embossing portion E may be formed to protrude in an irregular approximately wave shape, as shown at the left side of FIG. 5(b), for example. The embossing portion E may be formed to protrude in an irregularly scale-like or drop-like shape, as shown at the right side of FIG. 5(b), for example.

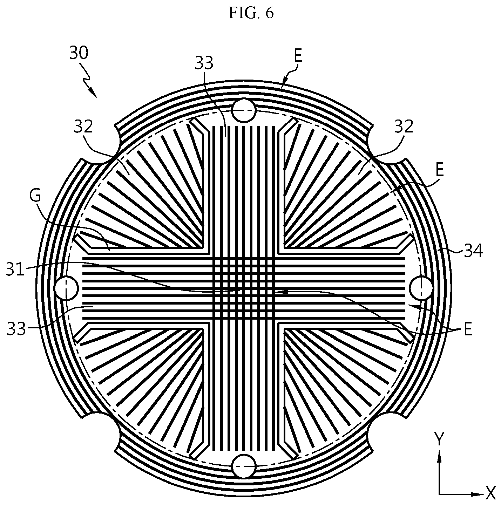

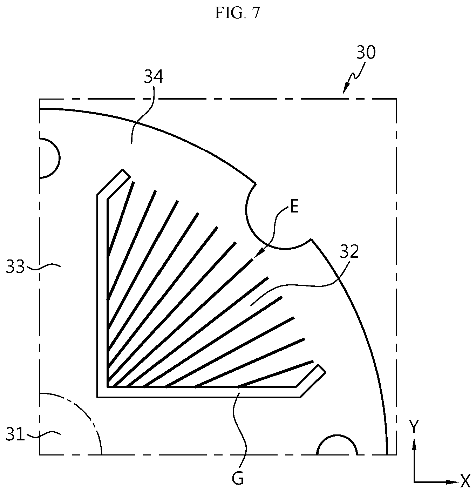

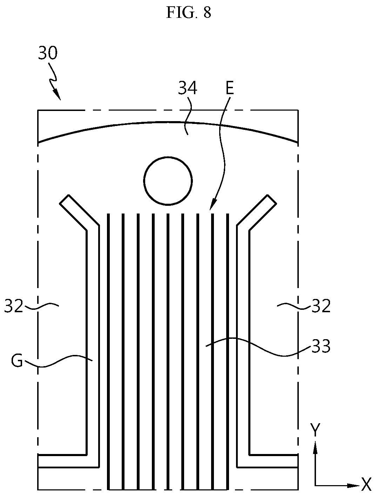

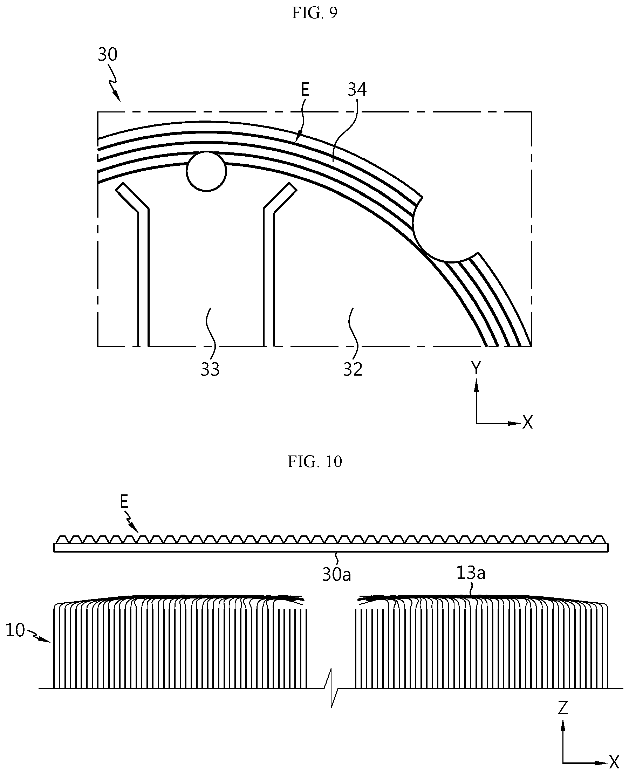

FIG. 6 is a plan view separately showing a current collector plate 30 of a battery 1 according to a modified example of an embodiment of the present disclosure, FIG. 7 is an enlarged plan view showing a second connection portion 32 in FIG. 6, FIG. 8 is an enlarged view showing a bridge portion 33 in FIG. 6, and FIG. 9 is an enlarged plan view showing a peripheral portion 34 in FIG. 6.

Hereinafter, the battery 1 according to modified examples of an embodiment of the present disclosure will be described in detail with reference to FIGS. 6 to 9.

In particular, referring to FIG. 6, in the battery 1 according to a modified example of an embodiment of the present disclosure, the current collector plate 30 may have a first connection portion 31.

The first connection portion 31 may be provided at the center of the current collector plate 30. For example, the first connection portion 31 may be a region that overlaps the central winding hole C in at least a part thereof when viewed along the central axis of the central winding hole C or in the Z-axis direction.

If the current collector plate 30 is the first current collector plate 30a, the first connection portion 31 may be a region electrically connected to the first terminal T1. The first connection portion 31 may be welded and coupled to the first terminal T1.

An embossing portion E may be provided on at least a part of the first connection portion 31.

If the embossing portion E is provided on the first connection portion 31 in this way, the rigidity of the first connection portion 31 may be strengthened and the heat dissipation effect may be improved. In addition, if the embossing portion E is provided on the first connection portion 31, the weldability with the first terminal T1, etc. may be improved.

In particular, referring to FIGS. 6 and 7, in the battery 1 according to a modified example of an embodiment of the present disclosure, the current collector plate 30 may have a second connection portion 32.

The second connection portion 32 may be a region electrically connected to the electrode assembly 10. The second connection portion 32 may be welded to the electrode assembly 10. If the current collector plate 30 is the first current collector plate 30a, the second connection portion 32 may be welded to the first foil tab 13a of the first electrode 11a. If the current collector plate 30 is the second current collector plate 30b, the second connection portion 32 may be welded to the second foil tab 13b of the second electrode 11b.

An embossing portion E may be provided on at least a part of the second connection portion 32.

If the embossing portion E is provided on the second connection portion 32 in this way, the rigidity of the second connection portion 32 may be strengthened and the heat dissipation effect may be improved. In addition, if the embossing portion E is provided on the second connection portion 32, the weldability with the electrode assembly 10 may be improved.

The embossing portion E provided on the second connection portion 32 may be configured in a radial shape. The embossing portion E may be formed in a radial shape extending from the center of the current collector plate 30 toward the outside of the current collector plate 30, for example, as shown in FIGS. 6 and 7. For example, the embossing portion E in the second connection portion 32 may be formed in a radial shape in a direction parallel to the radial direction.

In this case, the second connection portion 32 may be effectively prevented from being bent in the radial direction. In particular, the second connection portion 32 may be spaced apart from the first connection portion 31 or the bridge portion 33, explained later, by a gap G provided in the form of a slit or an empty space, as shown in FIG. 7, and in this case, the second connection portion 32 may be vulnerable to being bent in the radial direction. However, if the embossing portion E is configured as described above in the second connection portion 32, such radial bending deformation may be effectively prevented.

In particular, referring to FIGS. 6 and 8, in the battery 1 according to a modified example of an embodiment of the present disclosure, the current collector plate 30 may have a bridge portion 33.

The bridge portion 33 may be configured to connect the first connection portion 31 and the second connection portion 32 described above.

The current collector plate 30 may include a plurality of bridge portions 33. For example, the current collector plate 30 may include four bridge portions 33. The plurality of bridge portions 33 may be provided radially rotationally symmetrically with respect to the center of the current collector plate 30. For example, the plurality of bridge portions 33 may be configured in a cross shape.

An embossing portion E may be provided on at least a part of the bridge portion 33.

If the embossing portion E is provided on the bridge portion 33 in this way, the rigidity of the bridge portion 33 may be strengthened and the heat dissipation effect may be improved.

The bridge portion 33 may be formed to extend to connect the first connection portion 31 and the second connection portion 32. For example, the bridge portion 33 may be formed to extend long along the radial direction.

The embossing portion E provided on the bridge portion 33 may extend in a direction parallel to the extension direction of the bridge portion 33. That is, the embossing portion E may extend long along the longitudinal direction of the bridge portion 33.

In this case, the bridge portion 33 may be effectively prevented from being bent in the extension direction of the bridge portion 33. If the bridge portion 33 extends long between the first connection portion 31 and the second connection portion 32, the bridge portion 33 may be vulnerable to being bent in the extension direction. However, if the embossing portion E in the bridge portion 33 is configured as described above, the bending deformation of the bridge portion 33 in the extension direction may be effectively prevented.

Meanwhile, referring to FIG. 6 again, the embossing portion E in the first connection portion 31 may be configured in a grid shape. Specifically, since the embossing portion E of each of two bridge portions 33 arranged along the X-axis direction is connected along the X-axis direction and the embossing portion E of each of two bridge portions 33 arranged along the Y-axis direction is connected along the Y-axis direction, a grid-shaped embossing portion E formed along the X-axis direction and the Y-axis direction may be configured on the first connection portion 31. If the embossing portion E in the first connection portion 31 is configured in this manner, the heat dissipation effect and weldability of the first connection portion 31 may be further improved.

In particular, referring to FIGS. 6 and 9, in the battery 1 according to a modified example of an embodiment of the present disclosure, the current collector plate 30 may have a peripheral portion 34.

The peripheral portion 34 may be provided along the periphery of the edge of the current collector plate 30.

The peripheral portion 34 may be provided on the entire edge of the current collector plate 30 as shown in FIG. 6, or may be provided on only a part of the edge of the current collector plate 30, unlike that shown in FIG. 6.

The peripheral portion 34 may strengthen the overall rigidity of the current collector plate 30.

An embossing portion E may be provided on at least a part of the peripheral portion 34.

If the embossing portion E is provided on the peripheral portion 34 in this way, the rigidity of the peripheral portion 34 may be strengthened and the heat dissipation effect may be improved.

The peripheral portion 34 may be configured to extend in a circumferential direction. For example, the peripheral portion 34 may be configured to extend in a circumferential direction along the entire edge of the circular current collector plate 30.

The embossing portion E provided on the peripheral portion 34 may be configured to extend in a circumferential direction. That is, the embossing portion E provided on the peripheral portion 34 may be configured to extend in a direction parallel to the extension direction of the peripheral portion 34.

In this case, the peripheral portion 34 may be effectively prevented from being bent in the extension direction of the peripheral portion 34. If the peripheral portion 34 extends long along the edge of the current collector plate 30, the peripheral portion 34 may be vulnerable to being bent in the extension direction. However, if the embossing portion E on the peripheral portion 34 is configured as described above, the bending deformation of the peripheral portion 34 in the extension direction may be effectively prevented.

Referring to FIGS. 6 to 9, the embossing portion E may be provided in different shapes on at least two parts of the current collector plate 30. For example, at least two of the embodiment of FIG. 7, the embodiment of FIG. 8, and the embodiment of FIG. 9 may be combined. Alternatively, for example, as in the embodiment of FIG. 6, all of the embodiment of FIG. 7, the embodiment of FIG. 8, and the embodiment of FIG. 9 may be combined.

If the embossing portion E is provided in different shapes in at least two parts of the current collector plate 30 in this way, optimized rigidity, heat dissipation effect, and weldability may be secured for each part of the current collector plate 30.

FIG. 10 is a side cross-sectional view showing a battery 1 according to an embodiment of the present disclosure in which an embossing portion E is formed on a surface of the current collector plate 30 opposite to the electrode assembly 10.

Referring to FIG. 10, in the battery 1 according to an embodiment of the present disclosure, the embossing portion E may be formed on a surface of the current collector plate 30 opposite to the electrode assembly 10. Here, the surface opposite to the electrode assembly 10 may be understood as an outer surface of the current collector plate 30. For example, the surface opposite to the electrode assembly 10 may be understood as an upper surface of the first current collector plate 30a if the current collector plate 30 is the first current collector plate 30a (see FIG. 10), and may be understood as a lower surface of the second current collector plate 30b if the current collector plate 30 is the second current collector plate 30b.

If the embossing portion E is configured as described above in the current collector plate 30, the heat dissipation effect of the current collector plate 30 may be particularly further improved.

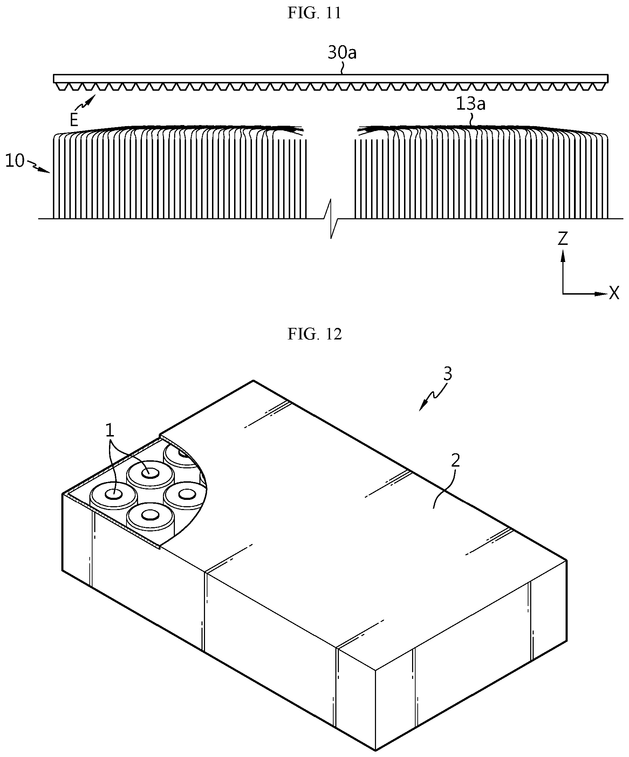

FIG. 11 is a side cross-sectional view showing a battery 1 according to an embodiment of the present disclosure in which an embossing portion E is formed on a surface of the current collector plate 30 facing the electrode assembly 10.

Referring to FIG. 11, in the battery 1 according to an embodiment of the present disclosure, the embossing portion E may be formed on a surface of the current collector plate 30 facing the electrode assembly 10. Here, the surface facing the electrode assembly 10 may be understood as an inner surface of the current collector plate 30. For example, the surface facing the electrode assembly 10 may be understood as a bottom surface of the first current collector plate 30a if the current collector plate 30 is the first current collector plate 30a (see FIG. 11), and may be understood as a top surface of the second current collector plate 30b if the current collector plate 30 is the second current collector plate 30b.

If the embossing portion E is configured as described above in the current collector plate 30, the wettability between the current collector plate 30 and the electrode assembly 10 may be particularly further improved.

Of course, an embodiment in which FIG. 10 and FIG. 11 are combined is also possible. For example, in some part of the current collector plate 30, the embossing portion E may be formed on the surface of the current collector plate 30 opposite to the electrode assembly 10, and in another part of the current collector plate 30, the embossing portion E may be formed on the surface of the current collector plate 30 facing the electrode assembly 10. Alternatively, for example, in the entire current collector plate 30, the embossing portion E may be formed on the surface of the current collector plate 30 opposite to the electrode assembly 10 and the surface facing the electrode assembly 10, respectively.

FIG. 12 is a drawing illustrating a battery pack according to an embodiment of the present disclosure.

Referring to FIG. 12, a battery pack 3 according to the present disclosure may include at least one battery 1 according to the present disclosure. The battery pack 3 may include a pack case 2 that stores one or more batteries 1.

For the convenience of drawing, components such as a bus bar for electrical connection of the batteries 1, a cooling unit, and an external terminal are omitted from the drawing. The structure of multiple batteries 1 for manufacturing the battery pack 3 has been described in the embodiments above.

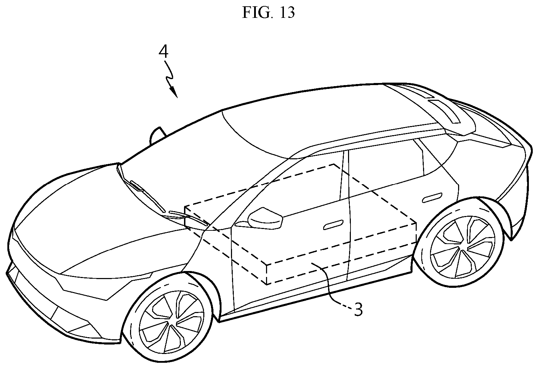

FIG. 13 is a drawing illustrating a vehicle according to an embodiment of the present disclosure.

Referring to FIG. 13, the battery pack 3 according to an embodiment of the present disclosure may be applied to a vehicle 4 such as an electric vehicle or a hybrid electric vehicle. That is, a vehicle 4 according to the present disclosure may include the battery pack 3 according to the present disclosure. The battery pack 3 may be installed in a body frame under a vehicle seat or in a trunk space. In addition to the battery pack 3, the vehicle 4 according to the present disclosure may further include various other components provided in the vehicle 4. For example, the vehicle 4 according to an embodiment of the present disclosure may further include a car body, a motor, a control device such as an ECU (electronic control unit), or the like, in addition to the battery pack 3 according to the present disclosure.

In addition, that the battery pack 3 according to the present disclosure may also be installed in other devices, apparatuses, and facilities such as an energy storage system using secondary batteries, in addition to the vehicle 4.

Meanwhile, although terms indicating directions such as up and down directions are used in this specification, it is obvious to those skilled in the art to which the present disclosure pertains that these terms are only for convenience of explanation with reference the relevant drawings and may vary depending on the position of the target object or the position of the observer.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains. Therefore, the above-described embodiments should be considered in a descriptive sense rather than a limiting sense. That is, the true scope of the present disclosure is defined by the claims, and all variations within the equivalent scope thereof should be interpreted as being included in the present disclosure.

## Claims

1. A battery comprising:
an electrode assembly formed by winding a stack having a first electrode, a second electrode, and a separator interposed therebetween;
a cell housing configured to accommodate the electrode assembly; and
a current collector plate electrically connected to the electrode assembly,
wherein an embossing portion is provided on at least a part of the current collector plate.

2. The battery according to claim 1,
wherein the embossing portion is formed in a regularly repeating pattern.

3. The battery according to claim 1,
wherein the embossing portion is formed in an irregular shape.

4. The battery according to claim 1,
wherein the current collector plate has a first connection portion provided at a center of the current collector plate, and
wherein the embossing portion is provided on at least a part of the first connection portion.

5. The battery according to claim 1,
wherein the current collector plate has a second connection portion electrically connected to the electrode assembly, and
wherein the embossing portion is provided on at least a part of the second connection portion.

6. The battery according to claim 5,
wherein the embossing portion provided on the second connection portion is configured in a radial shape.

7. The battery according to claim 1,
wherein the current collector plate includes:
a first connection portion provided at the center of the current collector plate;
a second connection portion electrically connected to the electrode assembly; and
a bridge portion configured to connect the first connection portion and the second connection portion,
wherein the embossing portion is provided on at least a part of the bridge portion.

8. The battery according to claim 7,
wherein the bridge portion is formed to extend to connect the first connection portion and the second connection portion, and
wherein the embossing portion provided on the bridge portion is configured to extend in a direction parallel to an extension direction of the bridge portion.

9. The battery according to claim 1,
wherein the current collector plate has a peripheral portion provided along a periphery of an edge, and
wherein the embossing portion is provided on at least a part of the peripheral portion.

10. The battery according to claim 9,
wherein the embossing portion provided on the peripheral portion is configured to extend in a circumferential direction.

11. The battery according to claim 1,
wherein the embossing portion is provided in different shapes on at least two parts of the current collector plate.

12. The battery according to claim 1,
wherein the embossing portion is formed on a surface of the current collector plate opposite to the electrode assembly.

13. The battery according to claim 1,
wherein the embossing portion is formed on a surface of the current collector plate facing the electrode assembly.

14. A battery pack comprising at least one battery according to any one of claims 1 to 13.

15. A vehicle comprising at least one battery pack according to claim 14.
